(19) Europäisches Patentamt
European Patent Office
Office européen des brevets

(11) EP 0 729 796 B1

(12) EUROPÄISCHE PATENTSCHRIFT

(45) Veröffentlichungstag und Bekanntmachung des Hinweises auf die Patenterteilung:
**02.02.2000 Patentblatt 2000/05**

(51) Int Cl.⁷: **B09C 1/08**, A62D 3/00, C02F 1/46

(21) Anmeldenummer: **96102929.5**

(22) Anmeldetag: **27.02.1996**

(54) **Verfahren zur Abtötung von Mikroorganismen und/oder Mineralisierung organischer Substanzen im Boden und/oder im Grundwasser**

Method for killing microorganisms and/or of mineralising organic substances in soil and/or groundwater

Procédé d'élimination de microorganismes et/ou de minéralisation de substances organiques dans le sol et/ou les eaux souterraines

(84) Benannte Vertragsstaaten:
**AT BE DE DK FR GB IT LU NL SE**

(30) Priorität: **28.02.1995 DE 19506911**

(43) Veröffentlichungstag der Anmeldung:
**04.09.1996 Patentblatt 1996/36**

(73) Patentinhaber: **Döring, Falk, Dr.**
**70469 Stuttgart (DE)**

(72) Erfinder: **Döring, Falk, Dr.**
**70469 Stuttgart (DE)**

(74) Vertreter:
**Haft, von Puttkamer, Berngruber, Czybulka**
**Patentanwälte**
**Franziskanerstrasse 38**
**81669 München (DE)**

(56) Entgegenhaltungen:
**DE-A- 4 301 270**
**DE-C- 3 920 342**
**US-A- 4 383 901**
**US-A- 4 983 267**
**US-A- 5 074 986**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 729 796 B1

## Beschreibung

Die Erfindung betrifft ein Verfahren zur Abtötung von Mikroorganismen und/oder zur Mineralisierung organischer Substanzen im Boden und/oder im Grundwasser nach dem Oberbegriff des Patentanspruches 1.

Das Wesen mikrobiologischer Bodensanierungsverfahren besteht darin, den Abbau organischer Bodenschadstoffe durch natürlich vorkommende Mikroorganismen in der Weise zu fördern, daß spezialisierte Mikroorganismen in einem Ausleseverfahren für verbesserte Abbauleistungen gezüchtet (Mutagenese mit überwiegend chemischen Mutagenen) und dann wieder in den Boden eingebracht werden. Das zentrale Problem der Mutagenese ist, daß sie lediglich im Stadium der Züchtung kontrollierbar ist. Die im Boden sich dann fortsetzende Mutagenese der Mikroorganismen ist praktisch nicht steuerbar. Gerade die unkontrollierte Mutagenese in einem Schadstoffmilieu, wie z.B. Farbstoffen, Lösemitteln, Pestiziden usf. kann Mutanten erzeugen, die carcinogen und/oder theratogen (fruchtschädigend) und/oder pathogen wirken.

Ein zweiter Problemkreis entsteht dort, wo Krankheitserreger verstärkt auftreten können. Angesprochen sind z.B. Tierkörperbeseitigungsanstalten, Gerbereien und Pelzveredelungsbetriebe mit einer bereits natürlich vorhandenen, erhöhten Belastung mit pathogenen Keimen (bekannt sind z.B. die Erreger des Milzbrandes) sowie Schlachthöfe und landwirtschaftliche Betriebe usf.. Hier stellt sich das Problem, daß durch Sanierungsmaßnahmen das Wachstum pathogener Mirkroorganismen gefördert werden kann und daß sich durch eingesetzte Chemikalien (z.B. chlorierte Lösemittel zur Entfettung, Antibiotika usf.) eine unkontrollierbare Mutagenese einstellt.

Ein dritter Problemkreis ist insbesondere in den USA, England und Rußland zu erkennen, wo im Rahmen der biologischen Kriegführung im großen Maßstabe Feldversuche, u.a. mit höchstgefährlichen Krankheitserregern, wie z. B. den Erregern des Milzbrandes, durchgeführt wurden und ganze Landstriche für den Menschen auf Dauer unbewohnbar gemacht wurden.

Ein vierter Problemkreis entsteht durch jene Substanzen, die erst durch die Tätigkeit der Mikroorganismen entstehen (Metaboliten), wie Stoffwechselprodukte und/oder durch Biosynthese entstandene organische Substanzen. Diese Metaboliten sind häufig toxischer als die Ausgangssubstanzen. Eine Vielzahl dieser Metaboliten erweist sich als persistent und kann nicht durch Mikroorganismen abgebaut werden. Als nahezu klassische Metaboliten gelten die Aflatoxine, eine Gruppe von Stoffwechselprodukten der Schimmelpilze, die hoch toxisch und zudem mit Sicherheit carcinogen sind, sowie Cyanverbindungen, die von Cyanophyceae, einer Gruppe von etwa 2.000 einzelligen Mikroorganismen (Blaualgen) erzeugt werden.

Ein fünfter Problemkreis ergibt sich aus dem anthropogen verursachten Eintrag von organischen Substanzen (Schadstoffen) in den Boden und in das Grundwasser.

Ein sechster Problemkreis ergibt sich aus einer Vielzahl anorganischer, nicht wasserlöslicher Substanzen, wie z.B. Quecksilbersulfid, Bleimennige oder Arsentrioxid, die mit herkömmlichen Methoden bisher nicht oder nur mit hohen Kosten aus dem Boden und dem Grundwasser entfernt werden können.

Aus der DE-A-43 01 270 ist ein Verfahren zur Beseitigung von Schadstoffen im Erdbodenbereich bekannt, bei dem an im Erdbodenbereich angeordnete Elektroden eine Spannung angelegt wird, um ein elektrisches Feld aufzubauen, das so groß ist, daß nicht elektrokinetisch transportierbare Schadstoffe vor Ort zerstört werden. Je nach Elektrodenabstand wird beispielsweise eine Spannung angelegt, die von 1kV bis 90 kV reicht.

Die Aufgabe der vorliegenden Erfindung besteht darin, ein Verfahren anzugeben, mit dem Mikroorganismen im Boden und/oder im Grundwasser abgetötet und/oder andere organische Substanzen im Boden und/oder im Grundwasser in-situ abgebaut und in der Weise beseitigt werden, daß sie mineralisiert, d.h. im wesentlichen zu Kohlendioxid und Wasser umgewandelt werden.

Diese Aufgabe wird durch ein Verfahren der eingangs genannten Art gelöst, das durch die Merkmale des Patentanspruches 1 gekennzeichnet ist.

Nach dem erfindungsgemäßen Verfahren ist es vorteilhafterweise auch möglich, nicht wasserlösliche anorganische Substanzen in der Weise zu zerlegen, daß sie in einem wässrigen Medium entweder in ionischer oder kolloidaler Form mobilisiert werden können.

Zu der Erfindung führten die folgenden Überlegungen. Eine gewisse, kleintechnisch in Anlagen angewandte Vorarbeit wurde durch die Immunitätsforschung bei der Herstellung und Sterilisierung von Seren geleistet. Als Verfahrensgrundlage dient die Elektrolyse, d.h. der Transport eines Elektrolyten durch eine semipermeable Membran. In der Regel werden bei der Elektrodialyse zwei Diaphragmen benötigt, die einen Mittelraum begrenzen, der mit einer kolloidalen Lösung gefüllt ist, während die Elektroden in den Außenkammern angeordnet sind. Auf dieser Verfahrensgrundlage werden in der DE-PS 383 491 (Elektro-Osmose AG) in einem Dreikammersystem mit ca. 400 $cm^2$ großen Elektroden Flüssigkeiten oder mit einer Kochsalzlösung getränktes festes Gut mit einem Strom von 10 - 12 A und einer Gleichspannung von 60 V in 2 Stunden sterilisiert, d.h. Streptokokken, Staphylokokken und Pneumokokken abgetötet. Ähnliche Anordnungen sind aus den Schriften DE-PS 397 888, DE-PS 150 328, DE-PS 397 551 und DE-PS 423 822 bekannt. Die sterilisierende Wirkung wird in den vorgenannten Patenten auf die Wirkung des elektrischen Stromes zurückgeführt. In der DE-PS 463 333 und der DE-PS 383 481 wurde jedoch nachgewiesen, daß der Strom keine

keimtötende Wirkung entfaltet und die keimtötende Wirkung auf anderen Phänomenen, insbesondere auf der Bildung einer schwachen Salzsäure aus der Dissoziation der Kochsalzlösungen beruht. Anwendungen auf den Boden und/ oder das Grundwasser ohne Verwendung von Diaphragmen sind indes nicht bekannt.

Elektrokinetische Verfahren unter Einsatz von zwei oder mehr Elektroden sind für die Bodenreinigung beispielsweise aus den Patenten US 5,137,608, US 5,074,986, EP 0 312 174 und DE 39 20 342 bekannt. Hierbei werden elektrokinetisch mobilisierbare Schadstoffe, wie überwiegend wasserlösliche Schwermetall-Verbindungen, und einige (hoch-)polare Substanzen, wie z.B. Phenole, ohne chemische Veränderung der Substanzen zu den Elektroden transportiert und an diesen gesammelt bzw. abgeschieden (metallische Schadstoffe) bzw. an diesen im Zuge von Elektrodenprozessen umgesetzt (polare organische Substanzen). Das Wesen der vorliegenden Erfindung besteht jedoch darin, daß die überwiegend organischen Schadstoffe durch technische Vorrichtungen, wie z.B. die periodische Umpolung des elektrischen Feldes und/oder sehr geringe Energieeinsätze nicht durch den Boden transportiert, sondern vor Ort, d.h. an den einzelnen Bodenpartikeln in Nicht-Faraday'schen Prozessen umgesetzt, d.h. mineralisiert werden.

In der DE-OS 43 01 270.1 wird ein Verfahren beschrieben, das die Zerstörung von organischen Schadstoffen vor Ort im Boden und/oder Grundwasser in der Weise durchführt, daß in einem ersten Schritt zur Erhöhung der Leitfähigkeit des Bodens zwischen den Elektroden durch Anlegen der Spannung ein Ionisierungskanal erzeugt wird und in einem zweiten Schritt eine Arbeitsspannung durch Einstellen der Stromstärke derart eingeregelt wird, daß die eingesetzte Energie gleich oder größer ist als die Elektronenaffinität der Schadstoffmoleküle bzw. der Radikale. Nach dem Unteranspruch 9 dieser Patentanmeldung erfolgt eine Oxidation der Schadstoffe durch Elektronenreaktionen.

In DE-OS 43 15 248 wird ein Verfahren zur Dekontaminierung eines mit Schadstoffen belasteten Stoffes (z. B. eines Bodens) beschrieben. In dem belasteten Stoff werden Elektrolyten zur Durchführung einer Elektrolyse sowie ein weiterer Elektrolyt eingebracht, derart, daß beim Anlegen einer elektrischen Spannung an die Elektroden bei der Elektrolyse mit den Schadstoffen reagierende Ionen erzeugt werden, die die Schadstoffe in unschädliche Reststoffe umwandeln sollen.

Weitere Verfahren betreffen elektrochemische Umsetzungsprozesse in Anlagen wie z.B. DE-OS 40 07 805, DE-OS 36 00 772 und DE-OS 40 13 068.

Zur Klarstellung und Abgrenzung der vorliegenden Erfindung gegen die oben beschriebenen Druckschriften werden vorab einige Begriffsbestimmungen gegeben. Nach der geltenden Lehre der Elektrochemie sind Umsetzungsreaktionen grundsätzlich nur an den Elektroden mit den entsprechenden Elektrodenreaktionen möglich [D. Rahner, H. Grünzig: Die Anwendung elektrochemischer Verfahren zur Sanierung kontaminierter Böden - Stand und Probleme; in: Umweltbundesamt (Hg.), Verfahren zur elektrochemischen Sanierung von Altstandorten, Berlin 1994]. Im Zuge von Experimenten im Labor-, Technikum- und Feldmaßstab, die zur vorliegenden Erfindung führten, konnte hinsichtlich des Reaktionsortes der Umsetzungsreaktionen unter den spezifischen Bedingungen des Bodens eine neue, von der bisherigen Lehre abweichende Lehre entwickelt werden. Danach ist in dem hier vorliegenden Patentbegehren der Ort der Umsetzungsreaktionen jedes einzelne Bodenpartikel. Boden wird definiert als ein Bereich, in dem mineralische Bodenkörner, Mikroorganismen, organische und anorganische Schadstoffpartikel, die alle insgesamt nachfolgend als Bodenpartikel bezeichnet werden, in natürlicher Lagerungsdichte bzw. als Auffüllung enthalten sind. Die Mineralkörner weisen in der Regel Korngrößen von ca. 0,001 mm bis > 100 mm auf. Die Mineralien sind chemisch nicht "rein", d.h. in den Kristallgittern sind regelmäßig Verunreinigungen enthalten, die mit Ausnahme der Edelgase fast alle natürlichen Elemente des periodischen Systems umfassen. Verschiedene dieser Elemente sind für ihre katalytische Wirkung bekannt.

Praktisch jeder natürliche Boden enthält Wasser in Form von Haft- und Kapillarwasser. Dieses Wasser ist durch seinen natürlichen Elektrolytgehalt elektronenleitend. Die Bestimmung der elektrischen Leitfähigkeit ist eines der Standardverfahren zur Bestimmung der Wassergüte. Aus der Hydrogeologie ist es bekannt, daß fast jedes Bodenpartikel von einer Haftwasserschale umgeben ist. Im Rahmen der vorliegenden Erfindung wurde ermittelt, daß es sich um eine zweischalige Hydrathülle entsprechend dem Nernst-/Sternschen Kolloidmodell mit einer Stärke von ca. 0,1 bis 0,15 μm (oder ca. 200 Moleküldurchmesser) handelt. In den Versuchen, die zu der hier vorliegenden Erfindung führten, konnte ferner ermittelt werden, daß dieses Haftwasser die entscheidende Voraussetzung für die Durchleitung eines Stromes durch den Boden darstellt. Es wurde nachgewiesen, daß eine nachträgliche Dotierung des Bodenwassers mit Elektrolyten zu keiner oder nur einer marginalen Veränderung der Stromparameter führt.

Die Bodenschadstoffe, die gleichfalls von einer Hydrathülle umgeben sind, sind unterschiedlich an die Bodenmatrix gebunden. Ein Teil der Schadstoffe wird hydratisiert und ist als Kolloid in den wassergesättigten Kapillaren frei beweglich. Unpolare Schadstoffe sind zu großen Teilen meist hydrophob an den Bodenpartikeln adsorbiert. Polare Substanzen wie Phenole sind oft über Wasserbrücken an den Bodenpartikeln koordiniert ("metallorganische" Koordinationsverbindungen). Die an Bodenkörner adsorbierten bzw. koordinierten organischen Substanzen entziehen sich einer Mobilisierung, sind aber erfindungsgemäß dennoch als Schadstoffe aus dem Boden und dem Grundwasser zu entfernen.

Zu berücksichtigen ist ferner, daß der Boden ein kompliziertes geoelektrisches System darstellt. In ihm sind regelmäßig natürliche elektrische Felder entwickelt, deren Ursachen vielfältig sind. Es handelt sich um Gleichströme

mit Spannungen zwischen 5 mV bis 1 V (gemessen zwischen 2 Elektroden im Abstand von 1 m), die z.T. durch vagabundierende Wechselströme mit Spannungen bis zu 23 V überlagert werden. Der Boden ist ferner teilweise ein starker Kondensator mit Kapazitäten zwischen 5 und 30 µF.

Aufgrund der gerichteten natürlichen elektrischen Felder bildet sich praktisch an jedem Bodenpartikel eine stabile elektrische Bipolschicht aus. Das elektrische System eines Bodenpartikels ist Teil eines größerräumigen elektrischen Feldes im Boden. Die im Erdbodenbereich vorhandene elektrische Polarisierung der Bodenpartikel, aber auch die Polarisierung von Mikroorganismen an der Phasengrenze zwischen z.B. Wasser und Zellwand/Zellwänden usw. wird für das erfindungsgemäße Verfahren ausgenutzt. Im Unterschied zu den anlagetechnischen Lösungen, in denen die Zahl der Elektroden die Zahl der Anoden- und Kathodenflächen bestimmt, findet sich im Erdbodenbereich praktisch eine unendliche Zahl von Bodenpartikeln mit einer auf einer Seite positiv (anodisch) und an der gegenüberliegenden Seite negativ (kathodisch) geladenen Fläche.

Im Unterschied zu bekannten Verfahren basiert das erfindungsgemäße Verfahren auf der geophysikalischen Grundlage der Polarisierung der einzelnen Bodenpartikel unter Verstärkung der bereits natürlich vorhandenen elektrischen Felder im Boden sowie im Grundwasser.

Es wurde im Rahmen der vorliegenden Erfindung herausgefunden, daß mit der Polarisierung der Bodenpartikel und der Ausbildung von Bipolen der sogenenannte Kondensatoreffekt des Bodens verbunden ist. Dieser Kondensatoreffekt bewirkt nun, daß bei Anlegen eines Sanierungsstromes und einem Stromfluß in Richtung des natürlichen Feldes eine Addition des Kondensatorstromes mit dem Sanierungsstrom, im Falle des gegen die natürliche Richtung des elektrischen Feldes gerichteten Sanierungsstromes eine Subtraktion der Ströme stattfindet. Der beim erfindungsgemäßen Verfahren einzusetzende Strom überlagert demzufolge die natürlichen elektrischen Felder. So wurde ermittelt, daß bei einer Gleichspannung von 12 V in einem natürlich gelagerten Feinsandboden der Sanierungsstrom 5,6 A und der Kondensatorstrom 4,4 A beträgt, wobei sich bei einem Stromfluß in Richtung der natürlichen Felder der Gesamtstrom auf 10 A addiert, während der Gesamtstrom in der Gegenrichtung sich bei 1,2 A einstellt.

Wird an dieses aquatische Bodensystem Energie in Form von Strom angelegt, werden an jeden einzelnen Bodenpartikel Redoxreaktionen ausgelöst, zu denen u.a. auch die Wasserelektrolyse zählt. Im Unterschied zu allen oben genannten bekannten Verfahren sind der Reaktionsort bei der vorliegenden Erfindung nicht die stromführenden Elektroden sondern jedes einzelne Bodenpartikel selbst. Im weiteren wurde herausgefunden, daß beim Anlegen eines Gleichstromes von mindestens 1,68 V pro Meter im Boden die elektrolytische Zerlegung des Wassers eingeleitet wird, die vor Ort an jedem einzelnen Bodenpartikel die benötigten Oxidations- bzw. Reduktionsmittel liefert. Weitere durch den Strom ausgelöste Umsetzungsreaktionen werden, katalytisch unterstützt, durch die Hydrolyse möglich wie z.B. die Hydrolyse von Benzol zu $CO_2$ und Wasser entsprechend der folgenden Reaktionsgleichung:

$$C_6H_6 + 12\ H_2O \rightarrow 6\ CO_2 + 30\ H^+ + 30\ e^-$$

In mehr als 2.100 Totalionenstrom-Chromatogrammen, gegliedert in 400 Zeitreihen, konnten bei bestimmungsgemäßer Anwendung des vorliegenden Verfahrens mit Hilfe von GC-MS-Einzelsubstanzauswertungen die folgenden Sequenzen des Schadstoffabbaus ermittelt werden. Die mit Buchstaben bezeichneten Prozesse sind nachfolgend definiert:

a. Langkettige Verbindungen oder Mehrring-Verbindungen werden zunächst aufgebrochen, wobei bevorzugte Bruchstellen festgestellt wurden. $C_{36}$ geht zunächst zu $C_{12}$, $C_6$ und $C_3$ über, Polycyclische Aromatische Kohlenwasserstoffe brechen bis zur BTEX-Stufe auf.
b. Gleichzeitig erfolgt die Oxidation der Kohlenwasserstoffe über Alkohole,
c. Aldehyde, Ketone
d. zu Carbonsäuren.
e. Die Carbonsäuren werden weiter zu $CO_2$ und Wasser aufoxidiert.

Im einzelnen ist ermittelt worden:

Im Verlauf der Abbauvorgänge für Mineralölkohlenwasserstoffe (Aliphaten) finden sowohl reduktive (Kettenbruch a) als auch oxidative Prozesse (Bildung der Carbonsäuren b, c, d, e) statt:

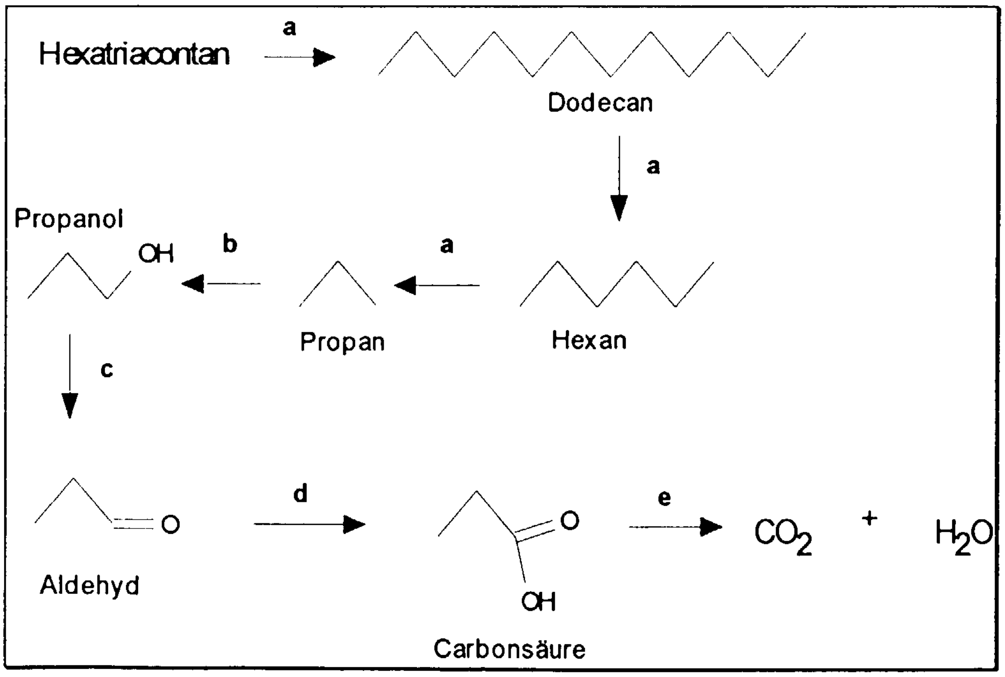


Der Abbau der Monoaromaten ist mit dem Abbau der MKW zu vergleichen. So wird z.B. Toluol zunächst zu einem aromatischen Alkohol, Aldehyd und schließlich zu Benzoesäure umgewandelt, bevor es dann zu $CO_2$ und Wasser zerfällt. Bei den übrigen BTEX liegt dieser Abbauvorgang ebenfalls zugrunde.

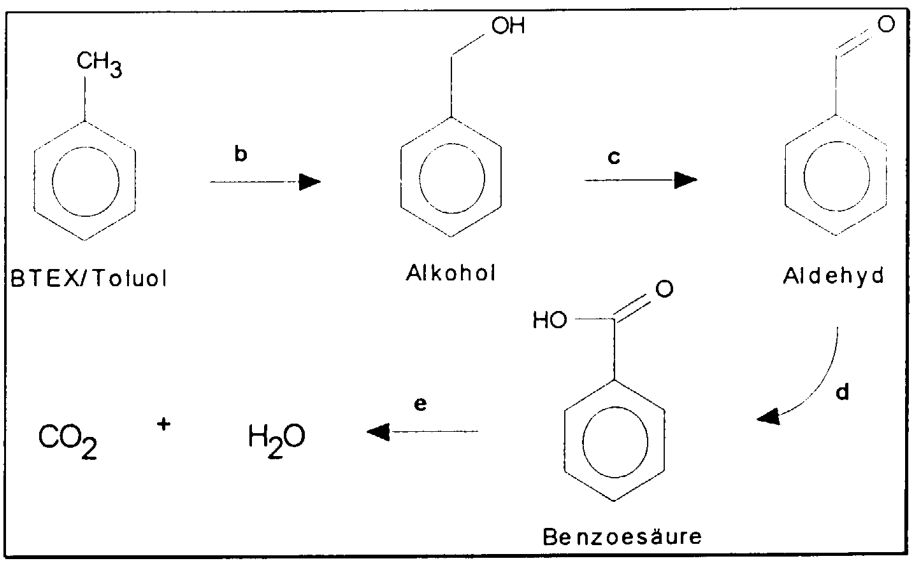


Die bestimmungsgemäße Anwendung des erfindungsgemäßen Verfahrens bewirkt bei PAK zunächst die Spaltung mehrkerniger PAK zu zwei- bzw. einkernigen Aromaten. Anschließend erfolgen die oben genannten Oxidationsprozesse b, c, d und e.

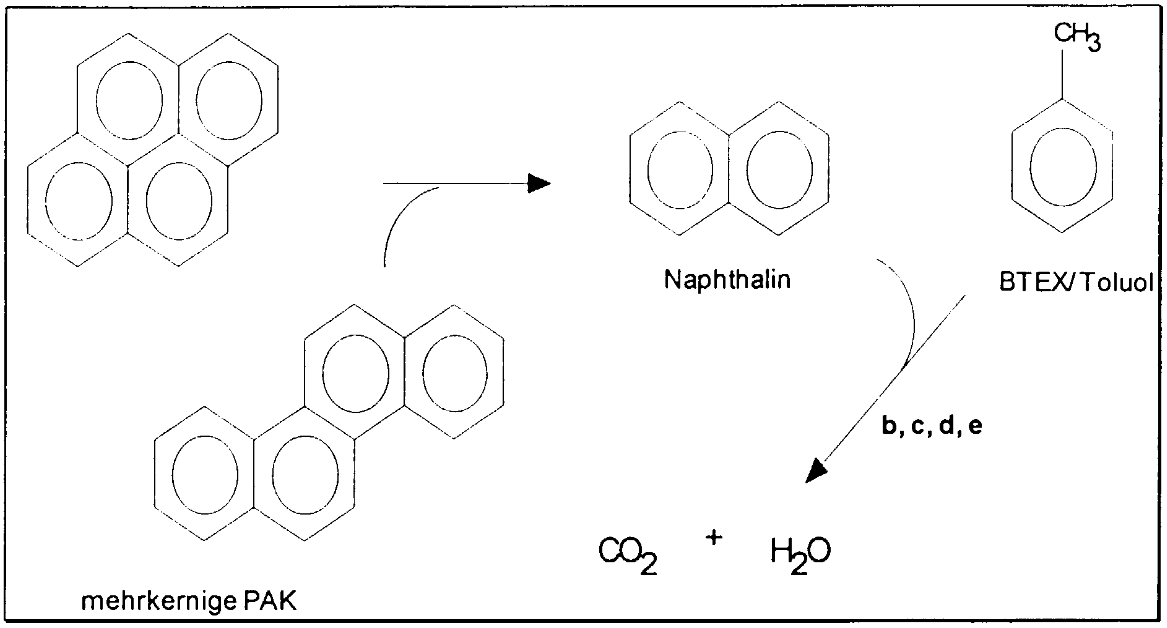


Im Verlauf einer Sanierung wird anfangs eine Erhöhung der Konzentrationen an Naphthalin und BTEX festgestellt, bevor diese Verbindungen, wie oben erwähnt, zu $CO_2$ und Wasser aufoxidiert werden.

Bei chlorierten Kohlenwasserstoffen (CKW, LCKW) findet eine schrittweise Deholagenierung (Reduktion) statt. So wurde bei der Sanierung schwerflüchtiger Chlorkohlenwasserstoffe, wie Hexachlorbutadien, im Verlauf der Sanierung eine Erhöhung an MKW (H18) gefunden. Die entstandenen MKW wurden dann wie oben angegeben über oxidative Vorgänge mineralisiert. Auch im Labormaßstab findet schrittweise eine Dechlorierung von z.B Per zu Tri dann zu Cis bzw. Trans statt, bevor $CO_2$, Wasser und Chloride entstehen.

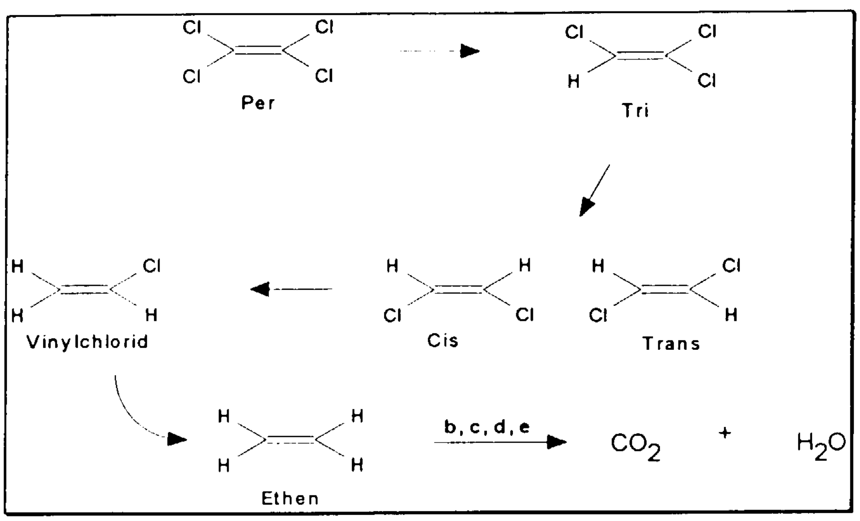


Auch cyclische Chlororganika werden zunächst dechloriert und anschließend durch Oxidationsprozesse mineralisiert. So wurden bei einem Laborversuch mit γ-Lindan am Ende nur noch Spuren von Chlorbenzol und Phenol (voraussichtlich Reste der Emulgatoren) gefunden.

Der Abbau von Stickstoffverbindungen, z.B. Acetonitril, erfolgt durch Hydrolyse über die Stufe des primären Amids zu Essigsäure. Diese wird dann im Verlauf der Geooxidation mineralisiert.

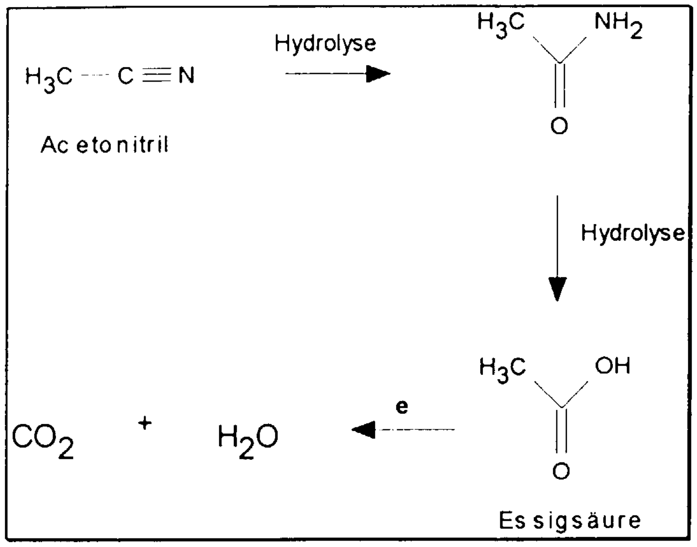


Beim Abbau von Aminen wurde das Entstehen von Azoverbindungen bzw. Triazoverbindungen festgestellt. Der Zerfall dieser Verbindungen erfolgt über reinen Stickstoff ($NO_x$ bzw $NH_x$ konnten nicht nachgewiesen werden), Kohlendioxid und Wasser.

Nitroverbindungen z.B. Nitroaromaten gehen ebenfalls in Azoverbindungen (z.B. Azobenzol) über. Dieser Reduktionsvorgang findet auch bei der Synthese von Azoaromaten in der chemischen Industrie Anwendung. Das Azobenzol spaltet Stickstoff ab, es entsteht Benzol, das wie in 2.2 beschrieben, mineralisiert wird.

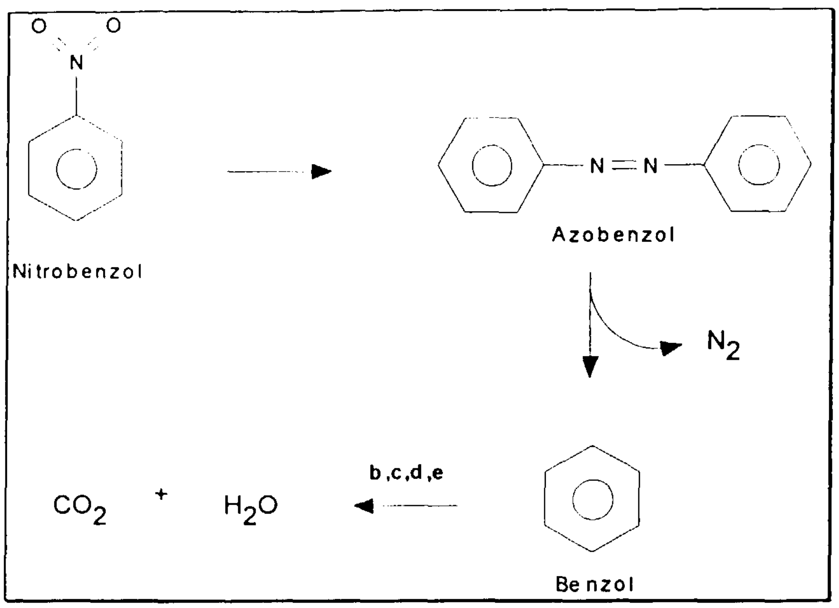


Die Ausbeute an Umsetzungsreaktionen ist im wesentlichen von der Stromstärke abhängig. Über Grenzflächen- und Redoxreaktionen ist es nunmehr möglich, an den Schadstoffpartikeln selbst wasserunlösliche anorganische Verbindungen aufzuspalten, d.h. in wasserlösliche bzw. kolloidale Form zu überführen. Die Mobilisierung bzw. die Austragung dieser Substanzen ist nicht Teil des Patentbegehrens.

Die in Bodenmineralien enthaltenen bzw. im Bodenwasser gelösten Alkali-, Erdalkalimetalle, Aluminium, Silicium, ferner die Schwermetalle wie Kupfer, Eisen, Nickel usf. dienen als Katalysatoren, die die Umsetzungsreaktionen z.T. einleiten bzw. die Aktivierungsenergie für die oxidativen bzw. reduktiven Abbauprozesse z.T. deutlich herabsetzen, so daß selbst Verbindungen, die eine hohe Aktivierungsenergie erfordern, mit den im Rahmen der vorliegenden Erfindung eingesetzten Energieparametern vollständig mineralisiert werden können. Die natürlichen Mineralien bzw.,

Schwermetalle können dabei auch direkt (nicht nur katalytisch, wo sie formal nicht verbraucht werden) mit den im Boden und/oder Bodenwasser vorhandenen organischen Verbindungen bzw. mit den aus den mikrobiologischen Abbau entstandenen Metaboliten als Reaktionspartner an Redox-Reaktionen teilnehmen und dadurch die organischen Verbindungen mineralisieren. In stark ausgelaugten Böden kann es sich als zweckmäßig erweisen, wasserlösliche, dispergierte oder suspendierte Katalysatoren in den Boden nach dem Stand der Technik einzubringen, vorzugsweise Fe-, Mn- bzw. Ni-Katalysatoren zur Unterstützung der Redox-und/oder Hydrolysereaktionen.

In einem Labor- und einem Containerversuch wurde die biocide Wirkung der Oxidationsprozesse überprüft. Dem Containerversuch war vor der elektrochemischen Behandlung eine Bodensanierung mit einer Mischung aus verschiedenen Mikroorganismen vorausgegangen. Durch mikrobiellen Abbau der Bodenschadstoffe waren bedeutende Mengen an Metaboliten entstanden, darunter Acetale, Aldehyde und Ketone, Amine und Amide. Vor Deponierung des Containerinhaltes auf einer Sonderabfalldeponie war es erforderlich, die im Container enthaltenen Mikroorganismen abzutöten. Bei Anlegen eines Stromes von 20,83 A/$m^2$ Elektrodenoberfläche und einer Gleichspannung von 60 V konnte nachgewiesen werden, daß nach 72 Stunden Einwirkdauer alle Mikroorganismen abgetötet worden waren. Die Behandlung des Bodens wurde sodann mit unveränderten Stromparametern fortgesetzt. Mit einem Gaschromatograph-Massenspektrometer (GC-MS) konnte nachgewiesen werden, daß sogen. Naturstoffe wie Alanin, Carotenal, Cholesten, Conanin-Amine, Dinorgammaceran usf. innerhalb von 20 Tagen elektrochemischer Behandlung auf weniger als 11% der ursprünglichen Mengen abgebaut werden konnten. Die Behandlung des Bodens mit elektrischem Strom wurde sodann über weitere 43 Tage fortgesetzt, um die restlichen, angeführten Metaboliten zu mineralisieren. Am Ende der genannten Periode konnte mit dem GC-MS nachgewiesen werden, daß die Schadstoffbelastung um insgesamt 96% im Vergleich zur Eingangsbelastung zurückgegangen war.

Die Schadstoffentwicklung während der Boden- und Grundwassersanierung sowie die Mineralisierung der organischen Schadstoffe im Boden und im Grundwasser weist einen charakteristischen Verlauf auf, der direkt mit den Stromparametern zusammenhängt. Die in den Figuren 1 und 2 dargestellten, als Regelmäßigkeit zu beschreibende Kurvenverläufe bei in-situ-Sanierungsmaßnahmen werden bei dem vorliegenden Verfahren erfindungsgemäß zur Steuerung der Boden- und/oder Grundwassersanierung genutzt. Diese Vorgänge sind in der Figur 1 an unpolaren Substanzen (Mineralölkohlenwasserstoffe nach DIN 38409 H. 18) und PAK (US-EPA 1-16) dargestellt. In einer ersten Sanierungsphase, die zwischen 3 und 20 Tagen dauert, nimmt bei gleichbleibender Spannung die Stromstärke zu bzw. der spezifische Widerstand des Bodens ab; verbunden damit ist ein deutlicher Abbau der Bodenschadstoffe. Diese Phase wird als erste kolloidale Phase bezeichnet, weil die im Kapillarwasser vorhandenen, nicht an Bodenpartikel gebundenen, überwiegend kolloidalen Schadstoffe mineralisiert werden. Die sich daran anschließende Phase hat eine Dauer von ca. 20 bis 40 Tagen. In dieser Phase sinkt bei gleichbleibender Spannung die Stromstärke, z.T. um über 50%, der spezifische Widerstand des Bodens erhöht sich entsprechend. Die Schadstoffbelastung steigt deutlich, z.T. über die Ursprungswerte, an. Diese Phase wird als Desorptionsphase bezeichnet, weil in dieser Phase die an Bodenkörnern adsorbierten bzw. koordinierten Schadstoffe von der Bodenmatrix abgelöst und somit analytisch erfaßbar werden. In einer dritten Phase mit einer Dauer von etwa 5-20 Tagen werden die von der Bodenmatrix abgelösten und nunmehr überwiegend kolloidal vorliegenden Schadstoffe mineralisiert, d.h. bei gleichbleibender Spannung steigt mit zunehmenden Fortschritt des Schadstoffabbaus die Stromstärke erneut an bzw. der spezifische Widerstand nimmt ab. Diese Phase wird als zweite kolloidale Phase bezeichnet. Regelungstechnisch ist das Ende der Sanierung dann gegeben, wenn bei gleichbleibender Spannung die Stromstärke wieder deutlich abfällt, d.h. der spezifische Bodenwiderstand wieder ansteigt und das Niveau der Vergleichslage, d.h. eines vergleichbaren, von anfang an unbelasteten Bodens erreicht.

Für Bodenbelastungen mit überwiegend polaren Substanzen ergibt sich gemäß Figur 2 ein anderer Kurvenverlauf. In diesem Falle steigt bei gleichbleibender Spannung der Strom mehr oder minder leicht linear an und fällt nach ca. 40 bis 60 Tagen mit zunehmendem Abbau der Schadstoffe wieder ab. Regelungstechnisch ist das Ende der Sanierung gegeben, wenn der spezifische Widerstand des Sanierungsgeländes den Wert des spezifischen Widerstandes der Vergleichslage erreicht hat. Der am Ende der zweiten kolloidalen Phase für unpolare Substanzen zu beobachtende Knick der Stromstärke tritt weniger intensiv auf, ist aber dennoch zu beobachten. Die Amplitude der Schwankungen der Stromstärke hängt von der Art und der Konzentration der Schadstoffe ab; sie kann bis zu über 50% der Anfangsstromstärke betragen.

In Laborversuchen mit Inertelektroden konnte beobachtet werden, daß sich im Verlauf der Sanierung der pH-Wert des behandelten Bodenkörpers grundlegend verändert, d.h. er sinkt im Bereich der Anode ab, während er im Bereich der Kathode ansteigt. Bei bestimmungsgemäßer Anwendung des vorliegenden Verfahrens wird jedoch der pH-Wert bei Anwendungen im Feld im gesamten zu behandelnden Bodenkörper bei pH-Werten zwischen 6,5 und 7,8 stabilisiert, und zwar unabhängig vom Ausgangs-pH-Wert. Es konnte im Rahmen der Feldversuche ermittelt werden, daß durch die Auswahl geeigneter Elektrodenwerkstoffe die pH-Wertentwicklung im Boden und im Grundwasser gesteuert werden kann. Als vorteilhaft erweisen sich Elektroden aus einem Kohlenstoffstahl (z.B. St. 37) bzw. aus niederlegierten Stählen.

Die Sanierungsanordnung ist wie folgt zu beschreiben. Benötigt werden mindestens zwei Elektroden, die als

Rohr-, Platten- oder als Massivelektroden ausgebildet sein können. In Abhängigkeit von der Arbeitstiefe werden diese horizontal verlegt. Der Abstand der Elektroden voneinander ist abhängig von den topographischen und geoelektrischen Bedingungen des Geländes unter Einschluß dessen Bebauung und sollte vorzugsweise zwischen 6 und 30 m, gegebenenfalls auch darüber, liegen. Für größere Flächen ist eine Mehrfach-Elektrodenanordnung vorzusehen, wobei sich Elektrodenpaare mit Anode und Kathode bilden. In flächenhafter Abdeckung eines Sanierungsfeldes führt die Elektrodenpaarbildung - mit Ausnahme der randlich gelegenen Elektroden - zum Doppelanschluß von Elektroden in der folgenden Weise (Anode = A; Kathode = K) und beispielsweise zwei Elektrodenreihen:

A < - > K < = > A < = > K < - > A (Reihe 1)
A < - > K < = > A < = > K < - > A (Reihe 2)

wobei < = > eine Doppelbelegung der jeweiligen Elektrode und < - > eine Einfachbelegung bedeuten.

Die Schaltung der Elektroden in einer Mehrfachelektrodenanordnung kann entweder in Reihe, gleichpoliger Belegung der entsprechenden Elektrode oder über Kreuz (Focussierung) vorgenommen werden. Die Schaltungsform hängt im wesentlichen von den geoelektrischen Bedingungen des Geländes, der Höhe und Art der Schadstoffbelastung sowie weiteren sich aus dem Gelände ergebenden Parametern ab.

Es wurde herausgefunden, daß zweckmäßigerweise die Stromquelle für den Sanierungsstrom galvanisch vom Stromnetz getrennt werden sollte.

Es wurde ferner herausgefunden, daß die Mindestgleichspannung für je ein Elektrodenpaar 0,4 V bis 2 V, vorzugsweise 1,68 V, pro Meter Elektrodenabstand betragen sollte. In Abhängigkeit von der Bodenart, dem Wassergehalt und der Schadstoffbelastung können lokal unterschiedliche Spannungsverluste in vertikaler Richtung (d.h. in Richtung der Tiefe) im Boden eintreten. Diese sollten durch Erhöhung der Spannung ausgeglichen werden.

Es sind ein pulsierender Gleichstrom, ein Gleichstrom, aber auch ein ggf. frequenzmodulierter Wechselstrom geeignet, die oben genannten Vorgänge im Boden bewirken.

Zweckmäßigerweise sind die Elektrodenpaare untereinander, und zwar einzeln, galvanisch voneinander zu trennen.

Vorzugsweise werden die Elektroden in einem in Abhängigkeit von der Lage und Stärke der natürlichen elektrischen Felder zu bestimmenden Takt umgepolt, sofern nicht der Umpolung die Subtraktion des Kondensatorstromes entgegensteht.

Zweckmäßigerweise wird die Umpolung potentialfrei vorgenommen.

Die Elektroden sollen bezogen auf eine Längeneinheit, eine möglichst große Oberfläche aufweisen.

Als Elektrodenmaterial wird vorzugsweise ein sogenannter Kohlenstoffstahl (Baustahl), gegebenenfalls auch ein anderes elektrisch leitfähiges Material eingesetzt. Beim Einbau der Elektroden sollte das die jeweilige Elektrode berührende Boden-, Sand- oder Kiesmaterial eine Korngröße aufweisen, die gleich oder kleiner als die Korngröße des zu behandelnden (anstehenden) Bodens ist. Es wurde herausgefunden, daß die Mindestfeuchte des Bodens, bestimmt als Kapillarwasser, mindestens 6% sein sollte. Sofern diese Mindestfeuchte nicht gegeben ist, ist der Boden durch geeignete Maßnahmen nach dem Stand der Technik zu befeuchten. Bei horizontal verlegten Elektroden ist zweckmäßigerweise die Befeuchtung des Bodens mittels eines auf den Elektroden verlegten oder mit diesen fest verbundenen Dispensers durchzuführen.

Die zur Erzielung des Abtötungseffektes benötigte Stromstärke ist abhängig von der Art der zu behandelnden Mikroorganismen. Es wurde herausgefunden, daß die Stromstärke vorzusweise zwischen 20 A und 250 A pro $m^2$ Elektrodenoberfläche liegen sollte. Die Dauer der Behandlung ist abhängig vond der Art der zu behandelnden Mikroorganismen und der einsetzbaren Stromstärke und sollte mindestens 2 Stunden betragen. Für die Mineralisierung organischer Substanzen und das Aufbrechen wasserunlöslicher anorganischer Substanzen sollten vorzugsweise zwischen 1A und 20 A pro $m^2$ Elektrodenoberfläche eingesetzt werden.

## Patentansprüche

1. Verfahren zur Abtötung von Mikroorganismen und/oder zur Mineralisierung organischer Substanzen im Boden und/oder im Grundwasser durch einen an wenigstens ein in den Boden eingebautes Elektrodenpaar angelegten Gleichstrom, wobei die Bodenpartikel des Bodens durch ein durch die Spannung zwischen den Elektroden erzeugtes Feld polarisiert werden und/oder bereits polarisierte Bodenpartikel durch das erzeugte Feld zusätzlich polarisiert werden, wobei Prozesse der kathodischen Reduktion an den negativ geladenen Flächen der Bodenpartikel und gleichzeitig Prozesse der anodischen Oxidation an den positiv geladenen Flächen der Bodenpartikel bewirkt werden, dadurch gekennzeichnet, daß bei einer pro Elektrodenpaar angelegten Mindestspannung von 0,4 bis 2 V pro Meter Elektrodenabstand aus dem im Boden enthaltenen Wasser die Oxidations- bzw. Reduktionsmittel wasserelektrolytisch erzeugt werden, daß eine konstante Spannung beim Schadstoffabbau von unpolaren Verbindungen solange angelegt wird, bis nach einer ersten Sanierungsphase, in der die Stromstärke zunimmt, nach einer anschließenden zweiten Sanierungsphase, in der die Stromstärke wieder abnimmt, und nach einer anschließenden dritten Sanierungsphase, in der die Stromstärke wieder ansteigt, die Stromstärke wieder abfällt und der spezifische Widerstand des sanierten Bodens den Wert des spezifischen Widerstandes eines unbelasteten Vergleichsbodens erreicht, oder daß eine konstante Spannung beim Schadstoffabbau von polaren Substanzen solange angelegt wird, bis der spezifische Widerstand des sanierten Bodens nach einem Anstieg und folgenden Abfall der Stromstärke den Wert des spezifischen Widerstandes eines unbelasteten Vergleichsbodens erreicht.

**2.** Verfahren nach Anspruch 1, dadurch gekennzeichnet, daß zur Mineralisierung organischer Substanzen an den Bodenpartikeln Prozesse der Hydrolyse bewirkt werden.

**3.** Verfahren nach Anspruch 1, dadurch gekennzeichnet, daß zur Aufspaltung nicht wasserlöslicher anorganischer Verbindungen an den Grenzflächen der entsprechenden Bodenpartikel zum Bodenwasser Redox-Reaktionen ausgelöst werden.

**4.** Verfahren nach einem der Ansprüche 1 bis 3, dadurch gekennzeichnet, daß für die Mineralisierung organischer Substanzen bzw. das Aufbrechen anorganischer, wasserunlöslicher Verbindungen zwischen 1 A und 20 A pro Quadratmeter Elektrodenoberfläche eingesetzt werden.

**5.** Verfahren nach einem der Ansprüche 1 bis 3, dadurch gekennzeichnet, daß für die Abtötung von Mikroorganismen zwischen 20 A und 250 A pro Quadratmeter Elektrodenoberfläche eingesetzt werden.

**6.** Verfahren nach einem der Ansprüche 1 bis 5, dadurch gekennzeichnet, daß die ablaufenden elektrochemischen Reaktionen durch Zugabe in den Boden und/oder das Grundwasser von Katalysatoren gefördert und/oder beschleunigt werden.

**7.** Verfahren nach Anspruch 6, dadurch gekennzeichnet, daß als Katalysatoren Eisen und/oder Mangan und/oder Nickel verwendet werden.

**8.** Verfahren nach Anspruch 1 bis 7, dadurch gekennzeichnet, daß der Strom in der Richtung der natürlichen elektrischen Felder erzeugt wird.

**9.** Verfahren nach Anspruch 1 bis 7, dadurch gekennzeichnet, daß der Strom quer zur Richtung des natürlichen elektrischen Feldes erzeugt wird.

**10.** Verfahren nach einem der Ansprüche 1 bis 7, dadurch gekennzeichnet, daß in der Tiefe zwischen dem Elektrodenpaar auftretende Spannungsverluste durch Erhöhung der anzulegenden Spannung ausgeglichen werden.

**11.** Verfahren nach einem der Ansprüche 1 bis 10, dadurch gekennzeichnet, daß ein Gleichstrom, ein pulsierender Gleichstrom oder ein ggfs. frequenzmodulierter Wechselstrom angelegt wird.

**12.** Verfahren nach einem der Ansprüche 1 bis 11, dadurch gekennzeichnet, daß die Stromversorgung des Elektrodenpaares galvanisch vom Netz getrennt wird.

**13.** Verfahren nach einem der Ansprüche 1 bis 12, dadurch gekennzeichnet, daß mehrere Elektrodenpaare vorgesehen und einzeln untereinander galvanisch getrennt werden.

**14.** Verfahren nach einem der Ansprüche 1 bis 13, dadurch gekennzeichnet, daß die Schaltung der Elektroden in einer Mehrfachelektrodenanordnung entweder in Reihe, mit gleichpoliger Belegung der entsprechenden Elektrode oder über Kreuz (Focussierung) vorgenommen wird.

**15.** Verfahren nach einem der Ansprüche 1 bis 14, dadurch gekennzeichnet, daß das Elektrodenpaar getaktet umgepolt wird.

**16.** Verfahren nach einem der Ansprüche 1 bis 15, dadurch gekennzeichnet, daß die Kontakte eines zum Umpolen verwendeten Polwenders potentialfrei geschaltet werden.

**17.** Verfahren nach einem der Ansprüche 1 bis 16, dadurch gekennzeichnet, daß die Elektroden aus einem nicht- oder niederlegierten Kohlenstoffstahl hergestellt sind.

**18.** Verfahren nach einem der Ansprüche 1 bis 17, dadurch gekennzeichnet, daß die Elektrodenoberfläche maximiert wird.

**19.** Verfahren nach einem der Ansprüche 1 bis 18, dadurch gekennzeichnet, daß die Elektroden entweder horizontal oder vertikal im Abstand von etwa 6 m bis 30 m in den Boden eingebaut werden.

**20.** Verfahren nach einem der Ansprüche 1 bis 19, dadurch gekennzeichnet, daß der Elektrodenbereich horizontal verlegter Elektroden durch einen im Bereich der jeweiligen Elektrode verlegten oder an der Elektrode befestigten Dispenser befeuchtet und vor Austrocknung durch Elektroosmose geschützt wird.

**21.** Verfahren nach einem der Ansprüche 1 bis 20, dadurch gekennzeichnet, daß der die Elektrode umgebende Raum mit einem Bodenmaterial verfüllt und verdichtet wird, dessen Korngröße gleich oder kleiner ist, als die des anstehenden Bodens.

**22.** Verfahren nach einem der Ansprüche 1 bis 21, dadurch gekennzeichnet, daß die erste Sanierungsphase etwa 3 bis 20 Tage dauert.

**23.** Verfahren nach einem der Ansprüche 1 bis 22, dadurch gekennzeichnet, daß die zweite Sanierungsphase etwa 20 bis 40 Tage dauert.

**24.** Verfahren nach einem der Ansprüche 1 bis 23, dadurch gekennzeichnet, daß die dritte Sanierungsphase etwa 5 bis 20 Tage dauert.

## Claims

**1.** A process for the destruction of microorganisms and/or for the mineralisation of organic substances in the soil and/or in ground water by a direct current applied to at least one pair of electrodes installed in the ground, whereby the soil particles of the ground are polarised by a field produced by the voltage between the electrodes and/or already polarised soil particles are additionally polarised by the generated field, whereby processes of the cathodic reduction at the negatively charged faces of the soil particles and at the same time processes of the anodic oxidation at the positively charged faces of the soil particles are effected,
**characterised in that** with a minimum voltage of 0.4 to 2 V applied for each pair of electrodes, for each metre of electrode spacing from the water contained in the soil the oxidation and reduction means are produced by the electrolysis of water,
**in that** a constant voltage is applied during the decomposition of the contaminants of non-polar compounds until, after a first sanitation phase in which the current intensity increases, after a subsequent second sanitation phase in which the current intensity decreases again, and after a subsequent third sanitation phase in which the current intensity rises again, the current intensity falls again and the specific resistance of the sanitised soil reaches the value of the specific resistance of an uncharged comparison soil,
**or in that** a constant voltage is applied during the decomposition of the contaminants of polar substances until the specific resistance of the sanitised soil reaches the value of the specific resistance of an uncharged comparison soil after a rise and following fall in the current intensity.

**2.** A process according to Claim 1,
**characterised in that** processes of hydrolysis are effected on the soil particles for the mineralisation of organic substances .

**3.** A process according to Claim 1,
**characterised in that** redox reactions are initiated to split up water-insoluble inorganic compounds at the boundary surfaces of the corresponding soil particles to the ground water.

**4.** A process according to one of Claims 1 to 3,
**characterised in that** between 2 A and 20 A per square metre of electrode surface are used for the mineralisation of organic substances and respectively the breaking up of inorganic, water-insoluble compounds.

**5.** A process according to one of Claims 1 to 3,
**characterised in that** for the destruction of microorganisms between 20 A and 250 A per square metre of electrode

surface are used.

6. A process according to one of Claims 1 to 5,
**characterised in that** the electrochemical reactions taking place are promoted and/or accelerated by the addition to the soil and/or the ground water of catalysts.

7. A process according to Claim 6,
**characterised in that** iron and/or manganese and/or nickel are used as catalysts.

8. A process according to Claim 1 to 7,
**characterised in that** the current is generated in the direction of the natural electrical field.

9. A process according to Claim 1 to 7,
**characterised in that** the current is generated transversely to the direction of the natural electrical field.

10. A process according to one of Claims 1 to 7,
**characterised in that** voltage losses occurring in the depth between the pair of electrodes are equalised by increasing the voltage to be applied.

11. A process according to one of Claims 1 to 10,
**characterised in that** a direct current, a pulsating direct current or a possibly frequency-modulated alternating current is applied.

12. A process according to one of Claims 1 to 11,
**characterised in that** the current supply of the pair of electrodes is electrically insulated from the mains.

13. A process according to one of Claims 1 to 12,
**characterised in that** several pairs of electrodes are provided and are individually electrically insulated from one another.

14. A process according to one of Claims 1 to 13,
**characterised in that** the switching of the electrodes in a multiple electrode arrangement is performed either in series, with homopolar occupation of the corresponding electrode or via intersection (focussing).

15. A process according to one of Claims 1 to 14,
**characterised in that** the pair of electrodes is pole inverted in switched mode.

16. A process according to one of Claims 1 to 15,
**characterised in that** the contacts of a pole inverter used for pole inversion are connected without potential.

17. A process according to one of Claims 1 to 16,
**characterised in that** the electrodes are produced from a non-alloy or low-alloy carbon steel.

18. A process according to one of Claims 1 to 17,
**characterised in that** the electrode surface is maximised.

19. A process according to one of Claims 1 to 18,
**characterised in that** the electrodes are installed in the ground either horizontally or vertically with a spacing of roughly 6 m to 30 m.

20. A process according to one of Claims 1 to 19,
**characterised in that** the electrode region of horizontally laid electrodes is moistened by a dispenser laid in the region of the respective electrode or attached to the electrode and before drying out is protected by electro-osmosis.

21. A process according to one of Claims 1 to 20,
**characterised in that** the space surrounding the electrode is filled and sealed with a soil material, the grain size of which is the same as or smaller than that of the contiguous soil.

22. A process according to one of Claims 1 to 21,
**characterised in that** the first sanitation phase lasts for roughly 3 to 20 days.

23. A process according to one of Claims 1 to 22,
**characterised in that** the second sanitation phase lasts for roughly 20 to 40 days.

24. A process according to one of Claims 1 to 23,
**characterised in that** the third sanitation phase lasts for roughly 5 to 20 days.

**Revendications**

1. Procédé pour tuer des microorganismes et/ou pour minéraliser des substances organiques dans le sol et/ou dans les eaux souterraines par un courant continu circulant entre au moins deux électrodes disposées dans le sol, les particules du sol étant polarisées par un champ créé par la tension entre les électrodes et/ou des particules déjà polarisées étant polarisées davantage par le champ créé, des processus de réduction cathodique ayant lieu aux surfaces des particules du sol chargées négativement et des processus d'oxydation anodique ayant lieu en même temps aux surfaces des particules du sol chargées positivement, lequel procédé est caractérisé par le fait que, pour une tension minimale de 0,4 à 2 V par mètre de distance entre les électrodes, appliquée à chaque paire d'électrodes, les agents d'oxydation ou de réduction se forment par voie hydroélectrolytique à partir de l'eau contenue dans le sol, par le fait que, dans le cas de la décomposition de substances polluantes non polaires, on applique une tension constante jusqu'à ce que, après une première phase d'assainissement pendant laquelle l'intensité de courant augmente, après une deuxième phase d'assainissement pendant laquelle l'intensité de courant diminue et après une troisième phase d'assainissement pendant laquelle l'intensité de courant augmente de nouveau, l'intensité de courant diminue de nouveau et la résistivité du sol assaini atteigne une valeur identique à celle d'un sol comparatif non pollué, ou par le fait que, dans le cas de la décomposition de substances polluantes polaires, on applique une tension constante jusqu'à ce que la résistivité du sol assaini atteigne, après une augmentation suivie d'une diminution de l'intensité de courant, une valeur identique à celle d'un sol comparatif non pollué.

2. Procédé selon la revendication 1, caractérisé par le fait que, pour la minéralisation de substances organiques, on soumet les particules du sol à un processus d'hydrolyse.

3. Procédé selon la revendication 1, caractérisé par le fait que, pour la coupure de composés minéraux insolubles dans l'eau, on déclenche des réactions rédox aux interfaces particules du sol/eau du sol.

4. Procédé selon une des revendications 1 à 3, caractérisé par le fait que, pour la minéralisation de substances organiques ou pour la coupure de composés minéraux insolubles dans l'eau, on utilise entre 1 A et 20 A par mètre carré de surface d'électrode.

5. Procédé selon une des revendications 1 à 3, caractérisé par le fait que l'on utilise pour la destruction de microorganismes entre 20 A et 250 A par mètre carré de surface d'électrode.

6. Procédé selon une des revendications 1 à 5, caractérisé par le fait que les réactions électrochimiques sont accélérées ou favorisées par addition de catalyseurs dans le sol et/ou dans l'eau souterraine.

7. Procédé selon la revendication 6, caractérisé par le fait que l'on utilise comme catalyseurs du fer et/ou du manganèse et/ou du nickel.

8. Procédé selon les revendications 1 à 7, caractérisé par le fait que l'on fait circuler le courant parallèlement aux champs électriques naturels.

9. Procédé selon les revendications 1 à 7, caractérisé par le fait que l'on fait circuler le courant perpendiculairement au champ électrique naturel.

10. Procédé selon l'une des revendications 1 à 7, caractérisé par le fait que les pertes de tension ayant lieu en profondeur entre deux électrodes sont compensées par augmentation de la tension appliquée.

**11.** Procédé selon l'une des revendications 1 à 10, caractérisé par le fait que l'on applique un courant continu, un courant continu pulsé ou un courant alternatif éventuellement modulé en fréquence.

**12.** Procédé selon l'une des revendications 1 à 11, caractérisé par le fait que l'alimentation en courant du couple d'électrodes est séparée du réseau par isolement galvanique.

**13.** Procédé selon l'une des revendications 1 à 12, caractérisé par le fait que l'on prévoit plusieurs couples d'électrodes séparés les uns des autres par isolement galvanique.

**14.** Procédé selon l'une des revendications 1 à 13, caractérisé par le fait que, dans le cas d'une configuration à électrodes multiples, les électrodes sont branchées soit en série, les électrodes correspondantes ayant la même polarité, soit en croix (focalisation).

**15.** Procédé selon une des revendications 1 à 14, caractérisé par le fait que la polarité du couple d'électrodes est inversée de façon rythmée.

**16.** Procédé selon l'une des revendications 1 à 15, caractérisé par le fait que les contacts d'un commutateur utilisé pour l'inversion de polarité sont commutés hors potentiel.

**17.** Procédé selon l'une des revendications 1 à 16, caractérisé par le fait que les électrodes sont en acier carboné non allié ou faiblement allié.

**18.** Procédé selon une des revendications 1 à 17, caractérisé par le fait que la surface des électrodes est la plus grande possible.

**19.** Procédé selon une des revendications 1 à 18, caractérisé par le fait que les électrodes sont disposées horizontalement ou verticalement dans le sol à une distance d'environ 6 m à 30 m.

**20.** Procédé selon une des revendications 1 à 19, caractérisé par le fait que le domaine d'une électrode disposée horizontalement est humidifié par un dispensateur disposé à l'intérieur du domaine de l'électrode ou fixé à l'électrode, et est protégé par électroosmose contre le dessèchement.

**21.** Procédé selon une des revendications 1 à 20, caractérisé par le fait que l'espace entourant l'électrode est rempli et rendu plus dense avec un sol dont les particules ont une taille inférieure ou égale à celle des particules du sol à dépolluer.

**22.** Procédé selon l'une des revendications 1 à 21, caractérisé par le fait que la première phase d'assainissement dure d'environ 3 à 20 jours.

**23.** Procédé selon l'une des revendications 1 à 22, caractérisé par le fait que la deuxième phase d'assainissement dure d'environ 20 à 40 jours.

**24.** Procédé selon l'une des revendications 1 à 23, caractérisé par le fait que la troisième phase d'assainissement dure d'environ 5 à 20 jours.

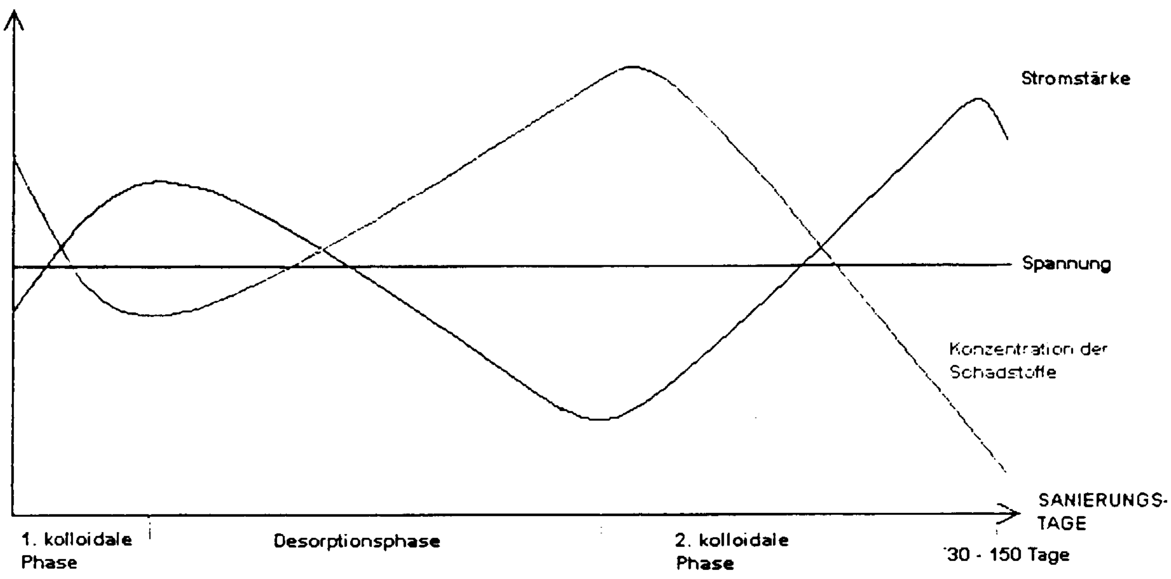
Stromstärke
Spannung
Konzentration der
Schadstoffe
SANIERUNGS-
TAGE
1. kolloidale
Phase
Desorptionsphase
2. kolloidale
Phase
30 - 150 Tage

FIG. 1

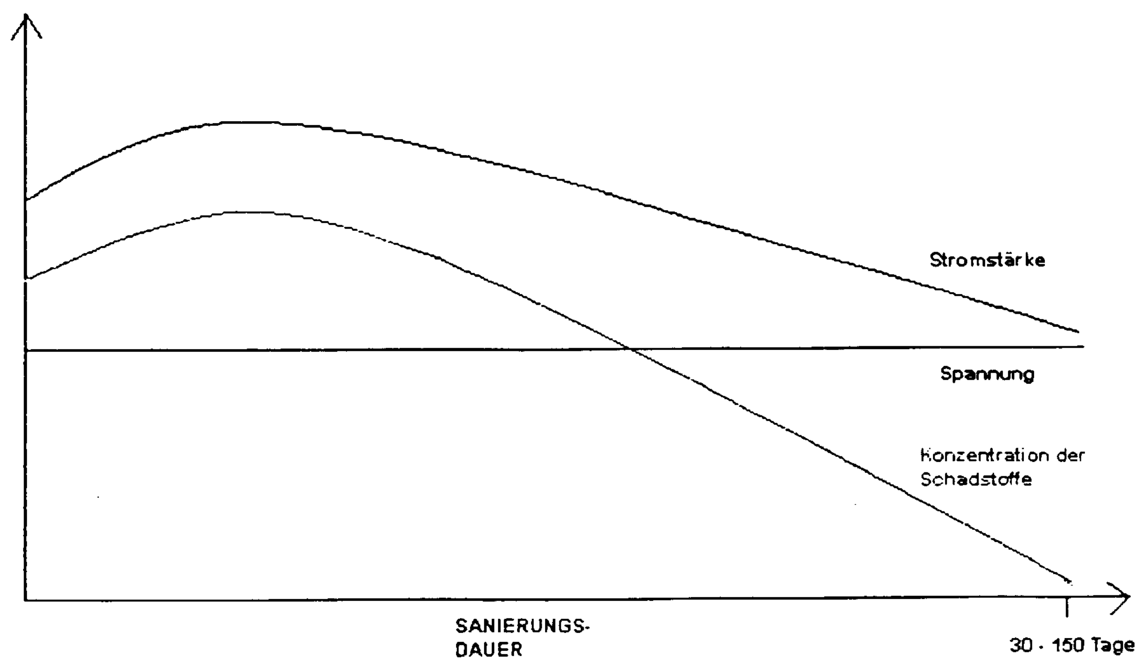
Stromstärke
Spannung
Konzentration der
Schadstoffe
SANIERUNGS-
DAUER
30 - 150 Tage

FIG. 2